# EUROPÄISCHE PATENTSCHRIFT

(11) **EP 3 748 047 B1**
(45) Veröffentlichungstag und Bekanntmachung des Hinweises auf die Patenterteilung: **05.08.2026**
(21) Anmeldenummer: 20178475.8
(22) Anmeldetag: 05.06.2020
(51) Int. Cl.: D01D 5/34, B29C 64/118, B33Y 70/00, D01F 1/10

(54) **KERN-HÜLLE-STRÄNGE UND DEREN VERWENDUNG IN 3D-DRUCKVERFAHREN ZUR HERSTELLUNG VON THERMOPLASTISCHEN FORMKÖRPERN**
CORE-SHELL-THREADS AND ITS USE IN 3D PRINTING METHODS FOR PRODUCING THERMOPLASTIC SHAPED BODIES
FIBRES À STRUCTURE NOYAU-COQUE ET LEUR UTILISATION DANS PROCÉDURES D'IMPRESSION EN TROIS DIMENSIONS POUR LA FABRICATION DES ARTICLES MOULÉS THERMOPLASTIQUES

(30) Priorität: 05.06.2019 DE 102019115171
(43) Veröffentlichungstag der Anmeldung: 09.12.2020
(73) Patentinhaber: Thüringisches Institut für Textil- und Kunststoff-Forschung e.V., 07407 Rudolstadt (DE)
(72) Erfinder: RHEIN, Patrick, 98693 Ilmenau (DE); AUSTMANN, Henning, 07407 Rudolfstadt (DE); HEINEMANN, Klaus, 07407 Rudolfstadt (DE); WELZEL, Thomas, 07745 Jena (DE); REDLINGSHÖFER, Benjamin, 07389 Ranis (DE)
(74) Vertreter: Plate, Jürgen

(56) Entgegenhaltungen:
- WO-A1-2018/108639
- WO-A1-2018/199959
- US-A1- 2017 268 133

## Beschreibung

Die Erfindung betrifft Polymerstränge auf Basis von thermoplastischen, organischen Polymeren und deren Verwendung zur Herstellung von aus Schichten aufgebauten, thermoplastischen Formkörpern. Die Schichten bestehen aus im Schmelzschichtverfahren miteinander verschweißten Einzelsträngen. Die Einzelstränge haben eine Kern-Hülle-Struktur. Kern oder Hülle oder beide enthalten mindestens ein Additiv, welches die Schichthaftung verbessert und mindestens ein Additiv, welches für die Verbesserung der Maßhaltigkeit und Wärmeformbeständigkeit zuständig ist.

Thermoplastische Formkörper, die im Schmelzschichtverfahren hergestellt werden, weisen häufig Defekte auf. Diese Defekte sind besonders häufig Fehlstellen, hervorgerufen durch ungleichmäßige Schwindung während der Herstellung sowie mangelnde Festigkeit in mindestens einer Raumrichtung. Die unregelmäßige Schwindung entsteht während des Schmelzschichtprozesses, wenn Einzelstränge des entstehenden Formkörpers ungleichmäßig schnell abkühlen. Schnell abkühlende Stränge schrumpfen dabei stärker als langsam abkühlende Stränge. Dadurch entstehen im Formkörper Spannungen zwischen Strängen und zwischen Schichten, was in aller Regel zum Verzug des Formkörpers führt.

Weitere Fehlstellen sind Lücken zwischen den einzelnen Strängen, die die Festigkeit des Verbundes zwischen den einzelnen Schichten reduzieren und somit die Gebrauchseigenschaften stark einschränken.

Um den Verzug zu regulieren, werden die thermoplastischen Formkörper nach dem Stand der Technik in beheizten Baukammern hergestellt, und nahezu ausschließlich aus amorphen Werkstoffen wie ABS, ASA, PC/ABS, PC, etc. hergestellt. Das Füllen der Kunststoffe mit idealerweise runden Füllstoffen nach dem Stand der Technik, wie Neuburger Kieselerde, Attapulgit, Glaskugeln, Mikrohohlglaskugeln, etc. führt zu verzugsfreien, aus Schichten und Einzelsträngen aufgebauten Formkörpern, zerstört jedoch die Haftung der Schichten untereinander. Dabei haben runde Füllstoffe einen negativen Einfluss auf die Festigkeit der Formkörper.

Amorphe Werkstoffe lassen sich sehr gut im Schmelzschichtverfahren verarbeiten, weisen aber für Anwendungen außerhalb des Prototypings zu geringe Festigkeiten, sowie zu geringe UV-Beständigkeiten, zu geringe Medienbeständigkeiten, beispielsweise gegen Kraftstoffe, vor allem aber zu geringe Formbeständigkeiten in der Wärme auf.

Funktionalisierte, thermoplastische Formkörper sind mit einkomponentigen Strängen im Schmelzschichtverfahren zugänglich. Für Funktionalisierungen, die nur an der Oberfläche des Formkörpers wirksam werden, z.B. antistatische Eigenschaften, antibakterielle Eigenschaften, dem Schutz vor UV-Strahlung oder teuren Farbstoffen muss relativ viel funktionales Additiv verbraucht werden, da der komplette, einkomponentige Strang funktional additiviert ist. Zudem kann durch die Additive die Haftung zwischen den Schichten verschlechtert werden.

WO 2018/108639 A1 (= EP 3 555 350 A1) beschreibt die Verwendung von den Filamenten umfassend ein Kernmaterial, das mit einer Schicht aus Hüllenmaterial beschichtet ist. Die Hülle- oder Kernmaterial kann ein Additiv ausgewählt aus UV-Stabilisatoren und/oder Antioxidationsmitteln, aus Pigmente wie organische Farbstoffen und/oder anorganischen Pigmenten enthalten.

Aus WO 2018/199959 A1 (= EP 3 615 718 A1) sind auch bekannt die strukturierten Filamente, die bei dem 3D-Drucken verwendet werden können und aus mindestens zwei verschiedenen Materialien in einer Kern/Hülle-Konfiguration bestehen. Bei der Herstellung von den Filamenten können Additive wie Fasern aus organischen und anorganischen Polymeren, Talkum, Kieselgel usw. eingesetzt werden. Filamente umfassend die thermoplastischen Polymeren betrifft ferner US 2017/0268133 A1. Die Filamente werden geschmolzen und extrudiert, um dreidimensionale Teile zu bilden. Als Additive sind in US '133 A1 metallische, nichtmetallische Partikel sowie feuchtigkeitsabsorbierende oder wärmeleitende Partikel geeignet.

Die Aufgabe der Erfindung besteht darin, Polymerstränge bereitzustellen, aus denen sich durch 3D-Druck verzugsfreie thermoplastische Formkörper herstellen lassen, die eine hohe Schichthaftung (Haftung in z-Richtung) und eine hohe Wärmeformbeständigkeit aufweisen.

Gelöst wurde die Aufgabe durch Kern-Hülle-Fasern, bei denen Kern (2) und/oder Hülle (3) sowohl mit mindestens einem Additiv versetzt ist/sind, welches ursächlich für die hohe Schichthaftung ist und mit mindestens einem Additiv, welches eine hohe Maßhaltigkeit und Wärmeformbeständigkeit hervorruft. Die thermoplastischen Formkörper werden daraus im Schmelzschichtverfahren hergestellt und können zusätzlich weitere Funktionen aufweisen. Wenn in der Erfindung vom Kern-Hülle-Verhältnis gesprochen wird, so ist das Verhältnis zwischen Hüllenquerschnittsfläche (3) und Kernquerschnittsfläche (2) gemeint.

Gegenstand der Erfindung sind somit Polymerstränge auf Basis von thermoplastischen, organischen Polymeren für die Herstellung von wärmeformbeständigen Formkörpern im 3D-Druckverfahren, wobei die Stränge eine Kern/Mantel-Struktur aufweisen, dadurch gekennzeichnet, dass die thermoplastischen Polymere abgemischt sind mit mindestens einem Additiv A, das die Schichthaftung in z-Richtung der Formkörper verbessert, wobei das Additiv A ausgewählt ist aus der Gruppe bestehend aus Lithiumchlorid, Ethylen-bis-stearamid, Montanwachs, Styrol-Maleinsäureanhydrid-Copolymere und Polyvinylpyrrolidon, und mindestens einem Additiv B, das den Verzug (warping) der Formkörper vermindert, wobei das Additiv B ein sphärischer Füllstoff ist, ausgewählt aus der Gruppe bestehend aus Mikrohohlglaskugeln und Mikrotalk, oder ein Nukleierungsmittel, beispielsweise auf Basis von Polyamid 2.2, ist. Zusätzlich können gegebenenfalls thermisch vorbehandelte Neuburger Kieselerde und/oder Attapulgit vorhanden sein.

Bevorzugt ist das Additiv A mit dem/den thermoplastischen Polymer(en) des Mantels abgemischt. Das Additiv B ist bevorzugt mit dem/den thermoplastischen Polymer(en) des Kerns abgemischt. Es können jedoch auch beide Additive nur im Kern, nur im Mantel oder im Kern und im Mantel vorliegen. Bei zwei oder mehr verschiedenen Additiven A kann eines oder können mehrere im Mantel, andere im Kern vorliegen. Gleiches gilt bei zwei oder mehr verschiedenen Additiven B.

Im Schmelzschicht- bzw. Fused Filament Fabrication (FFF) - Verfahren werden runde Kunststoffstränge über ein durch Schrittmotoren angetriebenes Fördersystem, üblicherweise bestehend aus Rändeln, durch eine beheizte Düse gepresst. In dieser Düse verjüngen sich die Stränge von üblicherweise 1,75 mm oder 2,85 mm Querschnittsdurchmesser auf den Düsendurchmesser von üblicherweise 0,4 oder 0,5 mm, manchmal auch auf 0,8 oder 1,0 mm. Der aus der Düse austretende dünne Strang wird bei Herstellung der ersten Schicht auf einer beweglichen Bauplattform abgelegt. Ist eine Schicht beendet, so bewegt sich die Bauplattform etwas (üblicherweise 0,1 bis 0,2 mm) nach unten und die zweite Schicht entsteht. Diese sowie alle weiteren Schichten werden auf dem schon gedruckten Objekt abgelegt. Die Düse ist am Druckkopf befestigt. In vielen Ausführungsformen bewegt sich der Druckkopf in x- und in y-Richtung, die Bauplattform in z-Richtung. Die Schrittmotoren in xy und z-Richtung sowie die Schrittmotoren zum Antrieb des Fördersystems werden über Microcontroller gesteuert.

In den erfindungsgemäßen Einzelsträngen aus umhüllten Kernen bestehen sowohl Hülle (3) als auch Kern (2) aus Thermoplasten, wobei Hülle und/oder Kern additiviert ist. Kern- und Hülle-Komponenten haben eine unterschiedliche Zusammensetzung, die sich sowohl in der Art der Polymere und/oder der Zusammensetzung der Additive unterscheiden können. Beim Passieren der Düsen des Schmelzschichtsystems bleiben die Kern-Hülle-Durchmesserverhältnisse in den untersuchten Fällen erhalten.

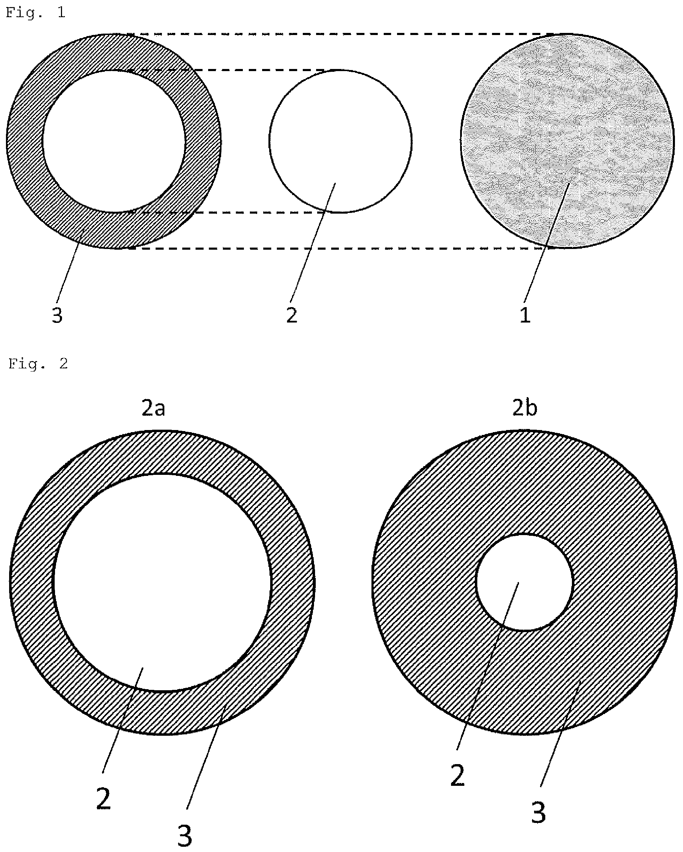

Die erfindungsgemäßen Kern-Hülle-Stränge werden mit Bikomponenten-Schmelzspinnanlagen erzeugt. Diese verfügen über zwei Extruder, die die Schmelzeströme durch eine gemeinsame Düsenpackung pressen. In der Düse entsteht der Kern-Hülle-Strang. Um einen gleichbleibenden Durchmesser und gleichbleibende Kern-Hülle-Flächenverhältnisse zu gewährleisten, sind diese Schmelzspinnanlagen mit Schmelzepumpen, z.B. Zahnradpumpen, ausgestattet. Die so erhaltenen Stränge haben einen Außendurchmesser von 0,5 bis 5 mm, und ein Kern-Hülle-Flächenverhältnis von 1:9 bis 9:1, bevorzugt im Bereich zwischen 7:3 und 1:1. Die Sträng haben allgemein einen kreisrunden Querschnitt mit einem konzentrisch angeordneten Kern, wie in Fig. 1 dargestellt.

Die Kern-Hülle-Stränge enthalten zusätzlich im Kern (2) und/oder in der Hülle (3) Additive. Hierdurch lassen sich im Schmelzschichtverfahren wärmeformbeständige Artikel mit guter Schichthaftung, verzugsfreie Formkörper mit guter Schichthaftung, ressourcenschonend funktionalisierte Formkörper mit antibakteriellen Eigenschaften in der Oberfläche, mit UV Stabilisatoren oder teuren Farbstoffen wie Fluoreszenzfarbstoffen in der Oberfläche herstellen. Auch die Herstellung von ansonsten nicht zugänglichen Strängen, beispielsweise aus bzw. mit Phasenwechselmaterialien ist möglich, indem dieses beispielsweise mit Polyamid umhüllt wird. Auch durch Ruß oder andere leifähige Additive oder Nanopartikel im Kern können die Kern-Hülle-Stränge funktionalisiert werden. Die Vorteile der Verwendung von Kern-Hülle-Strängen im Schmelzschichtverfahren treffen insbesondere auch bei der Verwendung einfacher, nicht bauraumbeheizter additiver Fertigungssysteme zu.

Geeignete Polymere für den Aufbau von Kern (2) und Hülle (3) sind beispielsweise, aber nicht ausschließlich Polymere mit Kohlenstoffhauptkette, wie Polyolefine, insbesondere Cycloolefin Copolymere (COC), Polypropylen (PP), Polystyrol (PS), Acrylnitril-Styrol-Acrylat-Copolymer (ASA), Acrylnitril-Butadien-Styrol-Copolymer (ABS), Methacrylat-Butadien-Styrol-Copolymer (MBS), Polyvinylchlorid (PVC), Polyvinylidenfluorid (PVDF), Polyvinylalkohol (PVA) und Acrylpolymerisate, sowie Polymere mit Heteroatomen in der Hauptkette, wie Polyamide (PA6, PA46, PA6/66, PA6.10), Polyphthalamide (PPA), Polyetherblockamide (PEBA), thermoplastisches Polyurethan (TPU), Polyethylenterephthalatglycol (PETG), Celluloseester und Celluloseether.

Bei Formkörpern aus amorphen oder teilkristallinen Thermoplasten wird zur Optimierung der Verzugsfreiheit vorzugsweise der Kern (2) mit 5 bis 20 % sphärischem Füllstoff beladen, insbesondere Mikrohohlglaskugeln oder Mikrotalk.Weitere Füllstoffe wie Neuburger Kieselerde oder Attapulgit können zusätzlich vorhanden sein.

Der sphärische Füllstoff besteht vorzugsweise aus Partikeln mit einem mittleren Durchmesser von 0,1 bis 20 µm, insbesondere 0,5 bis 10 µm. Für Polyamide kann der Füllstoff durch ein geeignetes Nukleierungsmittel, z.B. ein nicht schmelzbares Nukleierungsmittel auf Basis von PA 2.2, ersetzt sein, Dosierung 0,2 Gew.%. Das Nukleierungsmittel weist allgemein eine Partikelgröße d0.5 von 1 bis 20 µm auf, bevorzugt von 5 bis 12 µm.

Um die Schichthaftung zu verbessern kann vorzugsweise die Hülle (3) mit internen Gleitmitteln optimiert werden. Für Polyamide eignen sich auch Copolyamid PA 6/66, PA 6.10, Hotmelt; ggf. zusätzliche Gleitmittel wie Ethylenbisstearamid und/oder Kristallisationsverzögerer.

Für funktionelle Formkörper können die Additive im Kern (2) oder Hülle (3) vorhanden sein, z.B. erreicht man mit einer Zugabe von Printex XE2-B 14 % im Kern (2) eine Leitfähigkeit von 4 (Ohm-cm)⁻¹. Um Formkörper mit thermoregulativen Eigenschaften zu erhalten, umfasst der Kern (2) ein Phasenwechselmaterial (PCM). Dabei kann das PCM sowohl in Reinform als auch polymergebunden vorliegen.

Um die Haftung der Hülle (3) am Kern (2) zu verbessern, kann bei Polyamid dem Kern (2) zusätzlich Polyvinylpyrrolidon (PVP) zugegeben werden.

Allgemein umfassen die Additive zur Verbesserung der Schichthaftung Lithiumchlorid, Montanwachs, Styrol-Maleinsäureanhydrid-Copolymere, Polyvinylpyrrolidon und Ethylenbisstearamid.

Darüber hinaus können oberflächenwirksame Additive im Manteleingesetzt werden, zum Beispiel UV-Stabilisatoren, Vitamine, Biozide, antibakteriell wirksame Verbindungen, antistatische Additive wie Ruß, Graphen, Graphit, Nanotubes, Farbstoffe und Effektfarben oder Flammschutzmittel. Funktionsmaterialien wie Phasen-Wechselmaterialien (PCM) können in Rohform oder polymergebunden mit Styrol-Ethylen-Butylen-Styrol (SEBS) oder Styrol-Ethylen/Propylen-Styrol SEP(S) Blockcopolymeren als Kern-Material eingesetzt werden. Weitere funktionalisierende Additive für den Kern sind leitfähige Additive, Nanopartikel oder piezoelektrische Additive

Durch geeignete Kombination von Kern- und Hüllenkomponenten lassen sich die Vorteile beider Komponenten vereinen, ohne die sonst üblichen Nachteile. Die Vorteile sind insbesondere ein besserer Schichtverbund und damit bessere mechanische Eigenschaften wie Zugfestigkeit in allen Raumrichtungen. Des Weiteren sind besonders wärmeformbeständige und besonders verzugsfreie Formkörper durch das Schmelzschichtverfahren unter Verwendung von Kern-Hülle-Strängen mit Additiven möglich. Auch können funktionelle Additive ressourcenschonend verwendet werden, wenn sie nur in der Hülle (3) solcher Stränge eingesetzt werden. Durch die Verwendung additivierter Kern-Hülle-Stränge im Schmelzschichtverfahren sind Formkörper zugänglich, die so unter Verwendung einkomponentiger Stränge nicht erhältlich wären. Das Material des Kerns (2) ist entscheidend für die Wärmeformbeständigkeit und die Verzugsfreiheit, während das Material der Hülle (3) zuständig ist für eine gute Schichthaftung und Vermeidung von Fehlstellen.

Nach einer speziellen Ausführungsform ist ein erfindungsgemäßer thermoplastischer Formkörper mit thermoregulativen Eigenschaften aus Kern-Hülle-Strängen mit Phasenwechselmaterialien (Paraffin in SEBS oder SEP(S)) und sphärischen Additiven im Kern (2) des Strangs und mit Gleitmittel additiviertem Polyamid 6/66 in der Hülle (3) im Schmelzschichtverfahren hergestellt.

Ein erfindungsgemäßer thermoplastischer Formkörper besitzt an der Oberfläche antibakterielle Eigenschaften und wird im Schmelzschichtverfahren aus Kern-Hülle-Strängen hergestellt.

Der Kern (2) des Strangs besteht dabei aus Polyamid 6, das mit Nukleierungsmittel und Kristallisationsverzögerer additiviert ist. Die Hülle (3) des Strangs besteht aus Polyamid 6/66 mit Gleitmittel und einem Biozid-Masterbatch.

Ein erfindungsgemäßer thermoplastischer Formkörper besitzt besonders gute Schichthaftung, Formtreue und Wärmeformbeständigkeit. Dies wird erreicht, indem ein Kern-Hülle-Strang verwendet wird, dessen Kern (2) aus Polyamid 6 und die Hülle (3) aus einem anderen Polyamid besteht. Das Polyamid für die

Hülle (3) kann Polyamid 6.10, 6/66 oder ein Polyamid Hotmelt sein. Die verbesserte Schichthaftung wird durch das Polyamid in der Hülle, das mit Gleitmitteln wie Montanwachs oder Ethylenbisstearamid additiviert ist, bewirkt. Durch den Einsatz von Nukleierungsmitteln im Polyamid 6-Kern (2) lässt sich der Kern-Hülle-Strang verzugsfrei verdrucken.

Ein erfindungsgemäßer thermoplastischer Formkörper mit besonders guter Schichthaftung und guter Maßhaltigkeit kann im offenen, nicht-bauraumbeheizten Schmelzschichtverfahren aus Schichten aus Kern-Hülle-Strängen mit Acrylnitril-Butadien-Styrol-Blockcopolymer in der Hülle (3) und additiviertem Acrylnitril-Butadien-Styrol-Blockcopolymer im Kern (2) hergestellt werden. Geeignete Additive hierfür sind beispielsweise, Füllstoffe wie

Silfit Z91, Attapulgit, Mikrohohlglaskugeln, Glaskugeln und andere.

Die Bilder 1-6 sollen das Wesen der Erfindung verdeutlichen. Fig. 1 zeigt eine schematische Darstellung eines Bikomponenten-Stranges (1) mit einem Kern (2) und der Hülle (3).

In Fig. 2 a) ist ein Bikomponentenstrang mit einem Querschnittsflächenverhältnis von Mantelfläche zu Kernfläche von 1 : 1 dargestellt, in Bild 2 b) beträgt dieses Verhältnis 9 : 1.

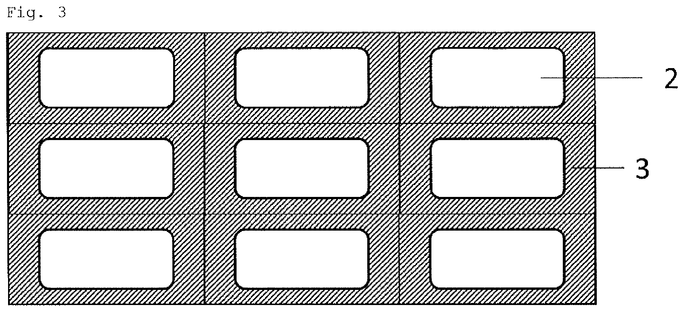

Fig. 3 zeigt einen Ausschnitt aus dem Querschnitt eines Formkörpers hergestellt im Schmelzschichtungsverfahren aus Bikomponentensträngen, bestehend aus einem Kern (2) und einer Hülle (3). Die gute Schmelzfähigkeit der Hülle führt zu einer guten Haftung neben- und übereinander abgelegter Bikomponentenstränge. Die Bildung von Fehlstellen (5) wird vermieden, dadurch weisen daraus hergestellte Formkörper eine gute Zugfestigkeit aus, die im Wesentlichen durch die Zugfestigkeit des Kerns bestimmt wird.

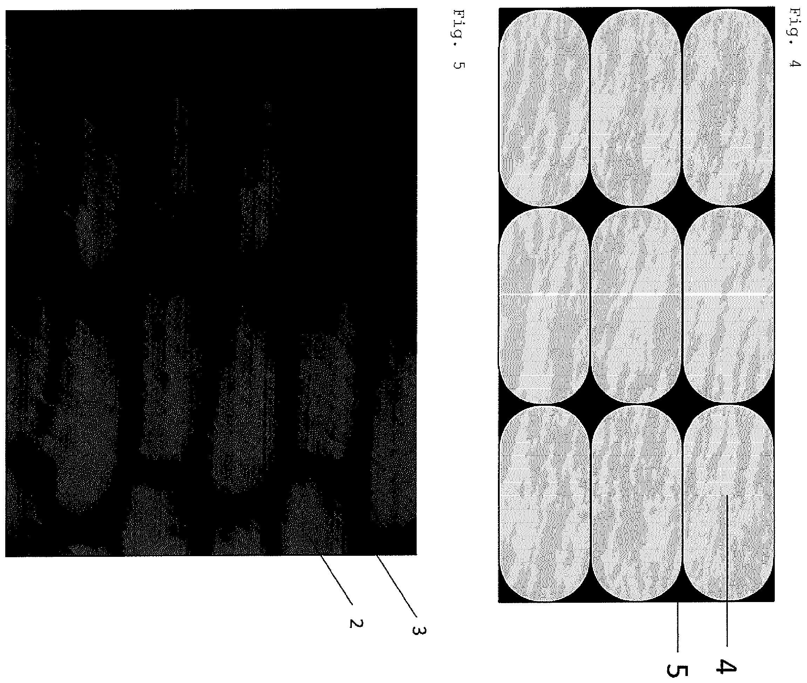

Für den Vergleich zeigt Fig. 4 einen Ausschnitt aus dem Querschnitt eines Formkörpers, hergestellt im Schmelzschichtungsverfahren aus Monokomponentensträngen (4). Die Fehlstellen (5) zwischen einzelnen Schichten und nebeneinander abgelegten Strängen sind deutlich zu erkennen
Fig. 5: Eingefärbte, mikroskopierte Schnitte eines im Schmelzschichtverfahren aus erfindungsgemäßen Kern-Hülle Strängen hergestellten Formkörpers. PA6 (Kern, helle Regionen) und Polyamid Hotmelt (Hülle), dunkle Region. Die gesamten Zwischenräume sind mit Polyamid Hotmelt gefüllt.

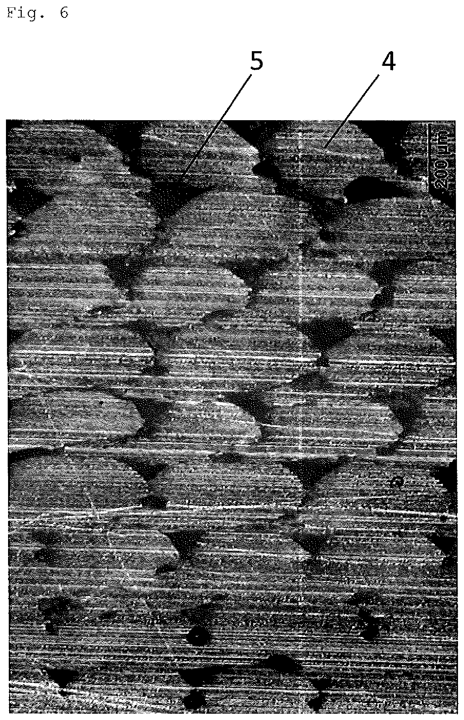

Fig. 6: Zum Vergleich wird ein eingefärbter, mikroskopierte Schnitt eines im Schmelzschichtverfahren aus Monokomponenten (4)- Strängen hergestellten Formkörpers dargestellt. ABS - Kern (4), helle Regionen) und Luft bzw. Fehlstellen (5) (dunkle Region).

### Beispiele

In den nachfolgenden Beispielen sind die Eigenschaften additivierter, in Schichten aus umhüllten Einzelsträngen bestehender thermoplastischer Formkörper dargestellt. Prozente sind in den Beispielen als Gewichtsprozente zu verstehen, soweit nicht anders angegeben oder aus dem Zusammenhang unmittelbar ersichtlich.

Die Schichthaftung wird dabei als Zugfestigkeit analog dem ISO 527-1 (2012) Zugversuch gemessen. Die Prüfkörper hierfür entsprechen ISO 527 Prüfkörpern, allerdings ist der lineare, mittlere Teil von 80 mm auf 0,4 mm verkürzt worden. Die Düsenbohrung des Drucksystems beträgt 0,5 mm, es wurde mit 4 Outlines und ohne Infill gedruckt. Der zu druckende Prüfkörper wird so ausgerichtet, dass er plan mit seiner kleinsten Seite auf dem Druckbett aufliegt, und dass die im Zugversuch wirkende Zugkraft senkrecht zur Schicht angreift.

Die Formbeständigkeit wird gemessen nach DIN EN ISO 75-2 (2013). Zur Bestimmung der Formbeständigkeit in der Wärme (Dauerbelastung) wird das Mittelstück eines ISO 527-1 1A Prüfkörpers herausgetrennt. Dieses hat die Maße 4 x 10 x 80 mm.

Es wird in einem Heizbad auf zwei Auflagepunkte gelegt. Von oben drückt ein Gewicht auf die Mitte des Prüfkörpers, entweder mit 0,45 MPa oder mit 1,8 MPa.

Dann wird die Temperatur des Heizbades schrittweise erhöht. Bei der Temperatur, bei der sich der Prüfkörper um einen bestimmten Betrag durchbiegt, wird die Wärmeformbeständigkeit ermittelt.

### Beispiel 1:

Hier wird ein Beispiel für einen Formkörper mit hoher Wärmeformbeständigkeit bei gleichzeitig starkem Schichtverband beschrieben.

Zur Herstellung des Formkörpers wird ein Kern-Hülle-Strang eingesetzt, bei dem die Hülle (3) des Strangs aus Polyamid Hotmelt und Ethylenbisstearamid, der Kern (2) des Strangs aus Polyamid 6, Mikrotalk, Ethylenbisstearamid und Polyvinylpyrrolidon besteht. Das Flächenverhältnis Kern (2) zu Hülle (3) beträgt 70 : 30. Der Strang wird im FFF-Verfahren verdruckt und ein verzugsfreier, wärmeformbeständiger Formkörper mit guter Schichthaftung entsteht.

Tabelle 1 zeigt deutlich, dass durch die Verwendung eines Hotmelt-Polyamides in der Hülle die Schichthaftung deutlich verbessert werden konnte und die mechanischen Eigenschaften des durch Schmelzschichtung hergestellten Formkörpers im Vergleich zu einem Formkörper nur aus dem Material des Kerns deutlich verbessert werden konnten.

**Tabelle 1: Gegenüberstellung mechanischer Parameter von Monokomponenten- und Bikomponentensträngen**

| Material | Typ | Additiv | Dosierung [%] | Zugfestigkeit zwischen den Schichten ISO 527-1 [MPa] | Bruch-dehnung [%] ISO 527-1 |
|---|---|---|---|---|---|
| PA6 | Ultramid B36 | Microtalc, EBS, PVP | 0,2; 0,5 | 17,5 | 2,08 |
| PA Hotmelt | Griltex | EBS | 0,5 | n.b. | n.b. |
| PA6 (Kern) | | Microtalc, EBS, PVP (Kern) | 0,2; 0,5 (Kern), 0,5 (Hülle) | 26,2 | 4,51 |
| PA Hotmelt (Hülle) | | EBS (Hülle) | | | |

| | | | | | |
|---|---|---|---|---|---|
| ^{®}Ultramid B36: Polyamid 6 der BASF AG | | | | | |

### Beispiel 2:

Zur Herstellung eines Formkörpers mit hoher Wärmeformbeständigkeit bei gleichzeitig starkem Schichtverband werden Kern-Hülle-Stränge aus Polyamiden eingesetzt.

Die Hülle (3) des Strangs besteht aus Polyamid 6.10 und Mikrotalk, der Kern (2) des Strangs besteht aus Polyamid 6, Mikrotalk, Ethylenbisstearamid und Polyvinylpyrrolidon. Das Flächenverhältnis Kern (2) zu Hülle (3) beträgt 70 : 30. Die Stränge werden im FFF-Verfahren zum entsprechenden Formkörper verdruckt.

In Tabelle 2 sind die Zugfestigkeit zwischen den Schichten und die Wärmeformbeständigkeit von Formkörpern aus Monokomponenten- und Bikomponentensträngen gegenübergestellt. Dabei wird die Zugfestigkeit zwischen den Schichten analog ISO 527-2 mit angepasstem Prüfkörper, wie oben beschrieben, gemessen. Die Wärmeformbeständigkeit wurde nach DIN EN ISO 75-2 gemessen. In der Tabelle wird der HDT A-Wert bei einer Gewichtsauflage von 1,8 MPa angezeigt.

Tabelle 2 zeigt, dass durch die Verwendung von PA 6.10 in der Hülle die Schichthaftung im Vergleich zu einem reinen PA 6-Strang deutlich verbessert werden konnte und die Wärmeformbeständigkeit des durch Schmelzschichtung hergestellten Formkörpers aus einem Kern-Hülle-Material nur geringfügig niedriger ist als bei einem Formkörper nur aus dem Material des Kerns.

**Tabelle 2: Gegenüberstellung von Zugfestigkeit und Formbeständigkeit von Formkörpern aus Monokomponenten- und Bikomponentensträngen**

| Material | Typ | Additiv | Dosierung | Zugfestigkeit zwischen den Schichten ISO 527-2 | Formbeständigkeit DIN EN ISO 75-2; HDTA, 1,8 MPa |
|---|---|---|---|---|---|
| | | | [%] | [MPa] | [°C] |
| PA6 | Ultramid B36 | Microtalc, EBS, PVP | 0,2; 0,5; 0,5 | 5 | 65 |
| PA6.10 | Akromid S3 | Microtalc | 0,2 | 28,9 | 55 |
| PA6 (Kern) | | Microtalc, EBS, PVP (Kern) | 0,2; 0,5; 0,5 (Kern), 0,2 (Hülle) | 28,9 | 63,5 |
| PA6.10 (Hülle) | | Microtalc (Hülle) | | | |

### Beispiel 3:

Die Hülle (3) des Strangs besteht aus Polyamid 6/66 und Mikrotalk und garantiert eine gute Haftung zwischen den Schichten und führt damit zu einer verbesserten Zugfestigkeit des Formkörpers. Der Kern (2) des Strangs besteht aus Polyamid 6, dem zur Verminderung des Verzugs Mikrotalk, Ethylenbisstearamid und Polyvinylpyrrolidon zugegeben wurden. Das Flächenverhältnis Kern (2) zu Hülle (3) beträgt 70 : 30. Der Strang wird im FFF-Verfahren zu einem Formkörper mit guter Schichthaftung und hoher Wärmeformbeständigkeit verdruckt.

Die Messung der Wärmeformbeständigkeit erfolgte nach DIN EN ISO 72-2 (2013) nach Methode A bei einer Gewichtsauflage von 0,45 MPa.

Tabelle 3 zeigt deutlich, dass die hohe Wärmeformbeständigkeit des Kerns aus PA 6 auch im Formkörper aus dem Bikomponentenstrang erhalten bleibt, obwohl die Hülle deutlich niedrigere Werte aufweist. Dafür trägt die gute Wärmeverformbarkeit der Hülle zu einer sehr guten Haftung zwischen den Schichten bei und damit zu einer guten Zugfestigkeit des Formkörpers, die nur geringfügig geringer ist im Vergleich zur Zugfestigkeit des Kernmaterials.

**Tabelle 3: Gegenüberstellung der Zugfestigkeit und der Wärmeformbeständigkeit von Mono- und Bikomponentensträngen**

| Material | Typ | Additiv | Dosierung [%] | Zugfestigkeit zwischen den Schichten ISO 527-2 [MPa] | Formbeständigkeit DIN EN ISO 75-2; 0,45 MPa (HDT A) [°C] |
|---|---|---|---|---|---|
| PA6 | Ultramid B36 | Microtalc, EBS, PVP | 0,2; 0,5; 0,5 | 5 | 160 |
| PA6/66 | Ultramid C33 | Microtalc | 0,2 | 30 | 140 |
| PA6 (Kern) | | Microtalc, EBS, PVP (Kern) | 0,2; 0,5 ; 0,5 (Kern), 0,2 (Hülle) | 30 | 158 |
| PA6/66 (Hülle) | | Microtalc (Hülle) | | | |

| | | | | | |
|---|---|---|---|---|---|
| ^{®}Ultramid C33: Polyamid 6/66 der BASF AG | | | | | |

### Beispiel 4:

Zur Herstellung eines verzugsfreien, d.h. maßhaltigen, Formkörpers mit gleichzeitig starkem Schichtverband werden Kern-Hülle-Stränge aus ABS und Füllstoff eingesetzt. Die Hülle (3) des Strangs besteht aus ABS und SMA (Styrol-Maleinsäureanhydrid-Copolymer), der Kern (2) des Strangs besteht aus ABS und Neuburger Kieselerde, die zusätzlich zu dem Additiv B eingesetzt wird, zur Reduzierung des Verzugs. Mit Verzug ist hier die Abweichung in den Maßen des Formkörpers von den Idealmaßen ohne Schwund, gemessen in mm, gemeint.

Das Flächenverhältnis Kern (2) zu Hülle (3) beträgt 70 : 30. Der Strang wird im FFF-Verfahren zu einem maßhaltigen Formkörper mit guter Schichthaftung verdruckt.

Tabelle 4 zeigt deutlich, dass der additivierte Kern maßgeblich zur Maßhaltigkeit des Formkörpers beiträgt, während die Hülle ohne Additiv die Zugfestigkeit des Formkörpers bestimmt.

**Tabelle 4: Gegenüberstellung der Zugfestigkeit und der Maßhaltigkeit von Formkörpern aus Mono- und Bikomponentensträngen**

| Material | Typ | Additiv | Dosierung [%] | Zugfestigkeit zwischen den Schichten ISO 527-2 [MPa] | Verzug [mm] |
|---|---|---|---|---|---|
| ABS | M203FC | | 0 | 30 | 11 |
| ABS | M203FC | Silfit Z91 | 5 | 23,5 | 3 |
| ABS | M203FC | XIRAN | 7 (Hülle) | 29,5 | 3 |
| | | Silfit Z91 | 5 (Kern) | | |

| | | | | | |
|---|---|---|---|---|---|
| ^{®}Xiran: Statistisches Styrol/Maleinsäureanhydrid-Copolmyer der Polyscope Polymers BV ^{®}Novodur M203FC: ABS der INEOS Styrolution Europe GmbH | | | | | |

### Beispiel 5:

Zur Herstellung eines Formkörpers mit starkem Schichtverband, welcher zusätzlich antibakteriell ausgerüstet ist, werden Kern-Hülle-Stränge mit Bioziden in der Hülle (3) eingesetzt. Das Flächenverhältnis Kern (2) zu Hülle (3) beträgt 70 : 30. Die Hülle (3) des Strangs besteht aus Polyamid 6/66 und 0,2 % Mikrotalk, 0,5 % Montanwachs und 66 % antimikrobiellem Masterbatch (hochverzweigte Polyimide, welche mit Kupferionen beladen sind), der Kern (2) des Strangs besteht aus Polyamid 6, 0,2% Mikrotalk und 0,3 % Polyvinylpyrrolidon. Die Stränge werden im FFF-Verfahren zum entsprechenden Formkörper verdruckt.

### Beispiel 6:

Zur Herstellung eines Formkörpers mit starkem Schichtverband, welcher zusätzlich thermoregulative Eigenschaften besitzt, werden Kern-Hülle-Stränge mit PCM-Material im Kern (2) eingesetzt. Die Hülle (3) des Strangs besteht aus mit Ethylen-bis-stearamid additiviertem Polyamid 6/66, der Kern (2) des Strangs besteht aus SEBS, welches mit Paraffin und zusätzlich Neuburger Kieselerde additiviert wird. Das Flächenverhältnis Kern (2) zu Hülle (3) beträgt 50 : 50. Die Stränge werden im FFF-Verfahren zum thermoregulativen Formkörper verdruckt. Zusätzlich kann dem Kern auch Bornitrid zugesetzt werden zur Verbesserung der Wärmeleitfähigkeit.

### Bezugszeichenliste

- 1: Gesamtquerschnitt eines Stranges
- 2: Kern eines Bikomponentenstranges
- 3: Hülle eines Bikomponentenstranges
- 4: Monokomponentenstrang
- 5: Fehlstellen

## Patentansprüche

1. Polymerstränge auf Basis von thermoplastischen, organischen Polymeren für die Herstellung von wärmeformbeständigen Formkörpern im 3D-Druckverfahren, wobei die Stränge eine Kern/Mantel-Struktur aufweisen, **dadurch gekennzeichnet, dass** das die thermoplastischen Polymere des Kerns und/oder des Mantels abgemischt sind mit mindestens einem Additiv A, das die Schichthaftung in z-Richtung der Formkörper verbessert, wobei das Additiv A ausgewählt ist aus der Gruppe bestehend aus Lithiumchlorid, Ethylen-bis-stearamid, Montanwachs, Styrol-Maleinsäureanhydrid-Copolymere und Polyvinylpyrrolidon, und mit mindestens einem Additiv B, das den Verzug (warping) der Formkörper vermindert, wobei das Additiv B ein sphärischer Füllstoff ist ausgewählt aus der Gruppe bestehend aus Mikrohohlglaskugeln und Mikrotalk oder ein Nukleierungsmittel ist.

2. Polymerstränge gemäß Anspruch 1, **dadurch gekennzeichnet, dass** das thermoplastische, organische Polymer für den Kern und/oder den Mantel ein Polymer mit einer Hauptkette ausschließlich aus Kohlenstoffatomen ist, bevorzugt ein Polyolefin, Polystyrol, ein Acetonitril/Styrol/Acrylat (ASA)-Copolymer, ein Acrylnitril/Butadien/Styrol-Blockcopolymer, ein Methacrylat/Butadien/Styrol(MBS)-Copolymer, Polyvinylchlorid (PVC), Polyvinylidenfluorid (PVDF), Polyvinylalkohol (PVA) oder ein Acryl-Polymer, oder dass es ein Polymer mit Heteroatomen in der Hauptkette ist, bevorzugt ein Polyamid, Polyether-block-amid (PEBA), ein thermoplastisches Polyurethan (TPU), ein Polyethylenterephthalat, ein Celluloseester oder ein Celluloseether ist.

3. Polymerstränge gemäß Anspruch 1 oder 2, **dadurch gekennzeichnet, dass** der sphärische Füllstoff aus Partikeln mit einem mittleren Durchmesser von 0,1 bis 20 µm, bevorzugt von 0,5 bis 10 µm, besteht.

4. Polymerstränge gemäß einem oder mehreren der Ansprüche 1 bis 3, **dadurch gekennzeichnet, dass** das Additiv A mit dem/den thermoplastischen Polymer(en) des Mantels abgemischt ist.

5. Polymerstränge gemäß einem oder mehreren der Ansprüche 1 bis 4, **dadurch gekennzeichnet, dass** das Additiv B mit dem/den thermoplastischen Polymer(en) des Kerns abgemischt ist.

6. Polymerstränge gemäß einem oder mehreren der Ansprüche 1 bis 5, **dadurch gekennzeichnet, dass** der sphärische Füllstoff fein verteilt im Kern in einem Anteil von 5 bis 20 Gew.-% enthalten ist, bezogen auf das Gesamtgewicht des Kerns.

7. Polymerstränge gemäß einem oder mehreren der Ansprüche 1 bis 6, **dadurch gekennzeichnet, dass** das thermoplastische, organische Polymer des Kerns und/oder der Hülle Polyamid oder ein Gemisch von zwei oder mehr verschiedenen Polyamiden ist und das funktionelle Additiv A Ethylenbisstearamid ist.

8. Polymerstränge gemäß einem oder mehreren der Ansprüche 1 bis 7, **dadurch gekennzeichnet, dass** in einem Querschnitt das Verhältnis der Fläche des Mantels zu der des Kerns im Bereich von 1 zu 9 bis 9 zu 1, bevorzugt im Verhältnis von 7 zu 3 bis 1 zu 1, liegt.

9. Polymerstränge gemäß einem oder mehreren der Ansprüche 1 bis 8, **dadurch gekennzeichnet, dass** sie einen Kern auf Basis von Polyamid 6, 46, 6/66 oder 6.10 mit einem Nukleierungsmittel auf Basis von Polyamid 2.2 aufweisen, wobei der Anteil an Nukleierungsmittel bevorzugt 0,18 bis 0,22 Gew.-% beträgt, bezogen auf das Gewicht des Kerns.

10. Polymerstränge gemäß einem oder mehreren der Ansprüche 1 bis 9, **dadurch gekennzeichnet, dass** sie einem im Wesentlichen kreisförmigen Querschnitt und einen Durchmesser von 0,5 bis 5 mm aufweisen, wobei der Kern konzentrisch angeordnet ist.

11. Polymerstränge gemäß einem oder mehreren der Ansprüche 1 bis 10, **dadurch gekennzeichnet, dass** der Kern und/oder der Mantel mindestens ein weiteres Additiv in Rohform oder polymergebunden enthält, das dem thermoplastischen Formkörper mindestens eine zusätzliche Funktionalität verleiht, wobei das weitere Additiv ein UV-Stabilisator, ein Vitamin, ein Biozid, bevorzugt eine antibakteriell wirksame Verbindung, ein Antistatikum, bevorzugt Ruß, Graphen, Graphit oder Kohlenstoff-Nanotubes, ein Farbstoff, bevorzugt ein Effektfarbstoff, und/oder ein Phasenwechselmaterial ist.

12. Verwendung der Polymerstränge gemäß einem oder mehreren der Ansprüche 1 bis 11 in einem 3D-Druckverfahren zur Herstellung von wärmeformbeständigen Formkörpern, **dadurch gekennzeichnet, dass** das 3D-Druckverfahren ein offenes Verfahren ist und keinen beheizten Bauraum benötigt.

13. Polymerstränge gemäß einem oder mehreren der Ansprüche 1 bis 11, **dadurch gekennzeichnet, dass** zusätzlich zu dem Additiv B gegebenenfalls thermisch vorbehandelte Neuburger Kieselerde und/oder Attapulgit vorhanden ist.

## Claims

1. Polymer strands based on thermoplastic organic polymers for the production of heat-distortion-resistant shaped bodies in 3D printing methods, where the strands have a core/shell structure, **characterized in that** the thermoplastic polymers of the core and/or shell have been blended with at least one additive A that improves layer adhesion in z direction of the shaped bodies, where the additive A is selected from the group consisting of lithium chloride, ethylenebisstearamide, montan wax, styrene-maleic anhydride copolymers and polyvinylpyrrolidone, and with at least one additive B that reduces the warping of the shaped bodies, where the additive B is a spherical filler selected from the group consisting of hollow glass microbeads and microtalc or a nucleating agent.

2. Polymer strands according to Claim 1, **characterized in that** the thermoplastic organic polymer for the core and/or shell is a polymer having a main chain composed exclusively of carbon atoms, preferably a polyolefin, polystyrene, an acetonitrile/styrene/acrylate (ASA) copolymer, an acrylonitrile/butadiene/styrene block copolymer, a methacrylate/butadiene/styrene (MBS) copolymer, polyvinyl chloride (PVC), polyvinylidene fluoride (PVDF), polyvinyl alcohol (PVA) or an acrylic polymer, or **in that** it is a polymer having heteroatoms in the main chain, preferably a polyamide, polyether block amide (PEBA), a thermoplastic polyurethane (TPU), a polyethylene terephthalate, a cellulose ester or a cellulose ether.

3. Polymer strands according to Claim 1 or 2, **characterized in that** the spherical filler consists of particles having an average diameter of 0.1 to 20 um, preferably of 0.5 to 10 µm.

4. Polymer strands according to one or more of Claims 1 to 3, **characterized in that** the additive A has been blended with the thermoplastic polymer(s) of the shell.

5. Polymer strands according to one or more of Claims 1 to 4, **characterized in that** the additive B has been blended with the thermoplastic polymer(s) of the core.

6. Polymer strands according to one or more of Claims 1 to 5, **characterized in that** the spherical filler is present in fine distribution in the core in a proportion of 5% to 20% by weight, based on the total weight of the core.

7. Polymer strands according to one or more of Claims 1 to 6, **characterized in that** the thermoplastic organic polymer of the core and/or shell is polyamide or a mixture of two or more different polyamides, and the functional additive A is ethylenebisstearamide.

8. Polymer strands according to one or more of Claims 1 to 7, **characterized in that** in a cross section the ratio of the area of the shell to that of the core is in the range from 1:9 to 9:1, preferably in the range from 7:3 to 1:1.

9. Polymer strands according to one or more of Claims 1 to 8, **characterized in that** they have a core based on nylon-6, -4,6, -6/6,6 or -6.10 with a nucleating agent based on nylon-2,2, where the proportion of nucleating agent is preferably 0.18% to 0.22% by weight, based on the weight of the core.

10. Polymer strands according to one or more of Claims 1 to 9, **characterized in that** they have an essentially circular cross section and a diameter of 0.5 to 5 mm, where the core is in a concentric arrangement.

11. Polymer strands according to one or more of Claims 1 to 10, **characterized in that** the core and/or shell contains at least one further additive in raw form or in polymer-bound form that imparts at least one additional functionality to the thermoplastic shaped body, where the further additive is a UV stabilizer, a vitamin, a biocide, preferably an antibacterial compound, an antistat, preferably carbon black, graphene, graphite or carbon nanotubes, a dye, preferably an effect dye, and/or a phase change material.

12. Use of the polymer strands according to one or more of Claims 1 to 11 in a 3D printing method for production of heat-distortion-resistant shaped bodies, **characterized in that** the 3D printing method is an open method and does not require a heated build space.

13. Polymer strands according to one or more of Claims 1 to 11, **characterized in that** optionally thermally pretreated Neuburg siliceous earth and/or attapulgite is present in addition to the additive B.

## Revendications

1. Brins polymères à base de polymères organiques thermoplastiques pour la fabrication de corps moulés résistants à la chaleur dans un procédé d'impression 3D, les brins présentant une structure noyau/enveloppe, **caractérisés en ce que** les polymères thermoplastiques du noyau et/ou de l'enveloppe sont mélangés avec au moins un additif A qui améliore l'adhérence des couches dans la direction z du corps moulé, l'additif A étant choisi dans le groupe constitué par le chlorure de lithium, l'éthylène-bis-stéaramide, la cire de montan, les copolymères de styrène-anhydride de l'acide maléique et la polyvinylpyrrolidone, et avec au moins un additif B qui diminue le gauchissement (warping) du corps moulé, l'additif B étant une charge sphérique choisie dans le groupe constitué par les microbilles creuses en verre et le microtalc ou un agent de nucléation.

2. Brins polymères selon la revendication 1, **caractérisés en ce que** le polymère organique thermoplastique pour le noyau et/ou l'enveloppe est un polymère présentant une chaîne principale exclusivement en atomes de carbone, de préférence une polyoléfine, un polystyrène, un copolymère d'acétonitrile/styrène/acrylate (ASA), un copolymère séquencé d'acétonitrile/butadiène/styrène, un copolymère de méthacrylate/butadiène/styrène (MBS), un poly(chlorure de vinyle) (PVC), un poly(fluorure de vinylidène) (PVDF), un poly(alcool vinylique) (PVA) ou un polymère d'acryle, ou **en ce que** ledit polymère est un polymère présentant des hétéroatomes dans la chaîne principale, de préférence un polyamide, un polyéther-bloc-amide (PEBA), un polyuréthane thermoplastique (TPU), un poly(téréphtalate d'éthylène), un ester de cellulose ou un éther de cellulose.

3. Brins polymères selon la revendication 1 ou 2, **caractérisés en ce que** la charge sphérique est constituée par des particules présentant un diamètre moyen de 0,1 à 20 µm, de préférence de 0,5 à 10 µm.

4. Brins polymères selon l'une ou plusieurs des revendications 1 à 3, **caractérisés en ce que** l'additif A est mélangé avec le(s) polymère(s) thermoplastique(s) de l'enveloppe.

5. Brins polymères selon l'une ou plusieurs des revendications 1 à 4, **caractérisés en ce que** l'additif B est mélangé avec le(s) polymère(s) thermoplastique(s) du noyau.

6. Brins polymères selon l'une ou plusieurs des revendications 1 à 5, **caractérisés en ce que** la charge sphérique est contenue de manière finement répartie dans le noyau en une proportion de 5 à 20% en poids, par rapport au poids total du noyau.

7. Brins polymères selon l'une ou plusieurs des revendications 1 à 6, **caractérisés en ce que** le polymère organique thermoplastique du noyau et/ou de l'enveloppe est un polyamide ou un mélange de deux polyamides différents ou plus et l'additif fonctionnel A est l'éthylène-bis-stéaramide.

8. Brins polymères selon l'une ou plusieurs des revendications 1 à 7, **caractérisés en ce que** dans une section transversale, le rapport de la surface de l'enveloppe à celle du noyau se situe dans la plage de 1:9 à 9:1, de préférence dans le rapport de 7:3 à 1:1.

9. Brins polymères selon l'une ou plusieurs des revendications 1 à 8, **caractérisés en ce qu'**ils présentent un noyau à base de polyamide 6, 46, 6/66 ou 6.10 comportant un agent de nucléation à base de polyamide 2.2, la proportion d'agent de nucléation représentant de préférence 0,18 à 0,22% en poids, par rapport au poids du noyau.

10. Brins polymères selon l'une ou plusieurs des revendications 1 à 9, **caractérisés en ce qu'**ils présentent une section transversale sensiblement circulaire et un diamètre de 0,5 à 5 mm, le noyau étant agencé de manière concentrique.

11. Brins polymères selon l'une ou plusieurs des revendications 1 à 10, **caractérisés en ce que** le noyau et/ou l'enveloppe contient au moins un autre additif sous forme brute ou liée au polymère, qui confère au moins une fonctionnalité supplémentaire au corps moulé thermoplastique, l'autre additif étant un stabilisant aux UV, une vitamine, un biocide, de préférence un composé actif de manière antibactérienne, un antistatique, de préférence la suie, le graphène, le graphite ou les nanotubes de carbone, un colorant, de préférence un colorant à effet, et/ou un matériau à changement de phase.

12. Utilisation des brins polymères selon l'une ou plusieurs des revendications 1 à 11 dans un procédé d'impression 3D pour la fabrication de corps moulés résistants à la chaleur, **caractérisée en ce que** le procédé d'impression 3D est un procédé ouvert et ne nécessite pas d'espace de construction chauffé.

13. Brins polymères selon l'une ou plusieurs des revendications 1 à 11, **caractérisés en ce qu'**en plus de l'additif B, de la silice de Neuburg (Neuburger Kieselerde) et/ou de l'attapulgite le cas échéant prétraitée(s) par voie thermique est/sont présente(s).
